# EUROPEAN PATENT APPLICATION

(11) **EP 1 245 918 A2**
(43) Date of publication of application: **02.10.2002**
(21) Application number: 01308408.2
(22) Date of filing: 02.10.2001
(51) Int. Cl.: F25D 29/00, F25D 23/12

(54) **Apparatus for controlling the temperature of foodstuffs**

(30) Priority: 26.03.2001 KR 2001015720
(71) Applicant: SAMSUNG ELECTRONICS CO., LTD., Suwon-City, Kyungki-do (KR)
(72) Inventor: Cho, Sung-ho, Kwangju City (KR); Kim, Kyoung-tae, Kwangju City (KR)
(74) Representative: Geary, Stuart Lloyd

(57) **Abstract**

Disclosed is an apparatus (1) comprising at least one chamber (20) and a temperature adjuster adjusting the temperature inside the chamber (20). A first temperature sensor (61) approximately senses the temperature inside the chamber (20). A second temperature sensor (63), spaced from the first temperature sensor (61), more accurately senses the temperature inside the chamber (20). A controller controls the temperature adjuster according to the temperature sensed by the second temperature sensor (63) when the temperature sensed by the first temperature sensor (61) is within predetermined temperature limits and the temperature sensed by the second temperature sensor (63) is not. With this configuration, the temperature inside the chamber is effectively controlled by an accurate and responsive sensing operation. Although one of the first and second temperature sensors (61, 63) may fail, it is possible to replace or repair the failed temperature sensor (63), or to control the temperature adjuster by the other serviceable temperature sensor (61).

## Description

The present invention relates to an apparatus for controlling the temperature of foodstuffs, the apparatus comprising a chamber for receiving foodstuffs, a first temperature sensor for sensing the temperature of said chamber, temperature adjusting means for adjusting the temperature of said chamber and control means for controlling the temperature adjusting means.

A "kimchi (Korean pickled vegetable) refrigerator" is intended for preserving food such as kimchi, which require fermentation and cooling.

Virtually all refrigerators have a sensor for sensing the temperature in the chamber and a controller for controlling them in dependence on the sensed temperature, in order to keep the chamber at a desired temperature.

A known "kimchi refrigerator" will now be described.

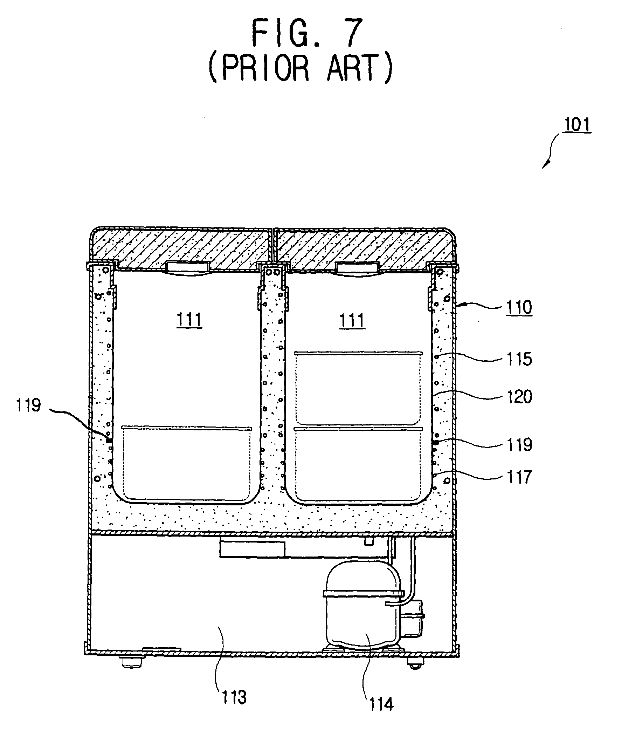

Figure 7 is a side sectional view of a known "kimchi refrigerator". As shown, the "kimchi refrigerator" is comprised of an outer casing 110 defining the refrigerator's outward appearance and an inner casing 120 defining two chambers 111. Foam material fills the space between the outer casing 110 and the inner casing 120. Below the chambers 111 is provided a component chamber 113.

In the foam-filled space are installed an evaporator pipe 115 and a heater 117 surrounding the inner casing 120. In the component chamber 113 are accommodated a compressor 114 supplying refrigerant to an evaporator (not shown), etc.

Sensor 119 are provided in the foam-filled space for sensing the temperatures of the chambers 111. The temperature sensors 119 are in contact with the outer surface of the inner casing 120 so as to sense the temperature of the chambers 111.

In this known "kimchi refrigerator", the sensed temperature is not very accurate because the temperature sensors are in contact with the outer surface of the inner casing 120. It is also difficult to react promptly to variations in the temperature of the chambers 111.

That is, because the temperature sensors 119 sense the temperature of the outer surface of the inner casing, to which heat from the evaporator pipe and the heater is directly transferred, a difference exists between the real temperatures inside the chambers and the sensed surface temperature of the inner casing. Moreover, when a temperature is changed, for example, by the adding new food to a chamber, it takes some time for the changed temperature inside the chamber to affect the temperature of the surface of the inner casing, and therefore, the temperature is neither promptly sensed by the sensor nor controlled by the controller.

In addition, because the sensors are installed in the foam-filled space for each chamber, it is impossible to repair or to replace the sensors when the sensors are out of order.

An apparatus according to the present invention is characterised by a second temperature sensor for sensing the temperature of said chamber, the second temperature sensor being located so as to sense the temperature of said chamber more accurately than the first temperature sensor, and the control means being configured to control the temperature adjusting means in dependence on the output of the second sensor, in the event that the output of the first sensor indicates a chamber temperature within a predetermined, acceptable temperature range.

Preferably, the control means is configured to operate said temperature adjusting means in the event that the output of the first sensor indicates a chamber temperature within said predetermined, acceptable temperature range and the output of the second sensor indicates a temperature outside of a different, predetermined, acceptable temperature range. More preferably, the control means is configured such that, in the event of the output of the second sensor indicating a temperature within said different, predetermined, acceptable temperature range, the temperature adjusting means is controlled in dependence on the output of the first sensor.

Preferably, the first and second sensors are located at lower and upper positions respectively. More preferably, the first sensor is positioned so as to sense the temperature of the chamber indirectly by sensing the temperature of a portion of a wall of the chamber and/or the second sensor is located in a recess, provided with a removable cover.

Preferably, the temperature adjusting means comprises cooling means and/or heating means.

Preferably, indicating means is included for indicating the operational condition of said sensors.

Preferably, there are two independently temperature controlled chambers for receiving foodstuffs.

Other preferred and optional features are set out in claim 11 to 40 appended hereto.

An embodiment of the present invention will now be described, by way of example, with reference to Figures 1 to 6 of the accompanying drawings, in which:
Figure 1 is a perspective view of a "kimchi refrigerator" according to the present invention;
Figure 2 is a side sectional view of the "kimchi refrigerator" of Figure 1;
Figure 3 is a plan view of a control panel of the "kimchi refrigerator" in Figures 1 and 2;
Figure 4 is a block diagram of the "kimchi refrigerator" of Figure 1;
Figures 5a through 5c are a flowchart illustrating the operation of the "kimchi refrigerator" of Figure 1 in a cooling mode;
Figures 6a through 6c are a flowchart illustrating the operation of the "kimchi refrigerator" of Figure 1 in a fermentation mode; and
Figure 7 is a side sectional view of a known kimchi refrigerator.

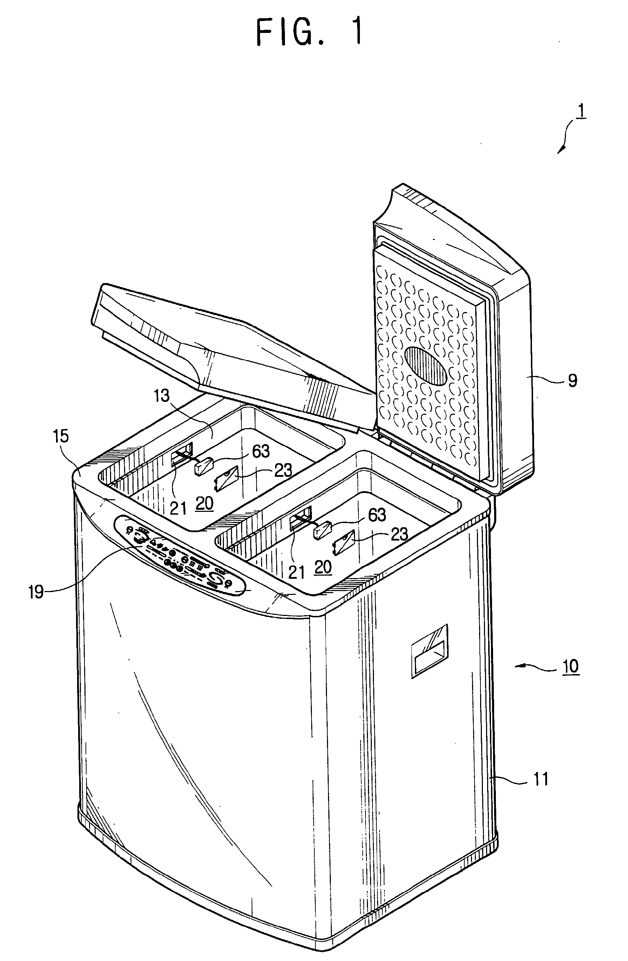

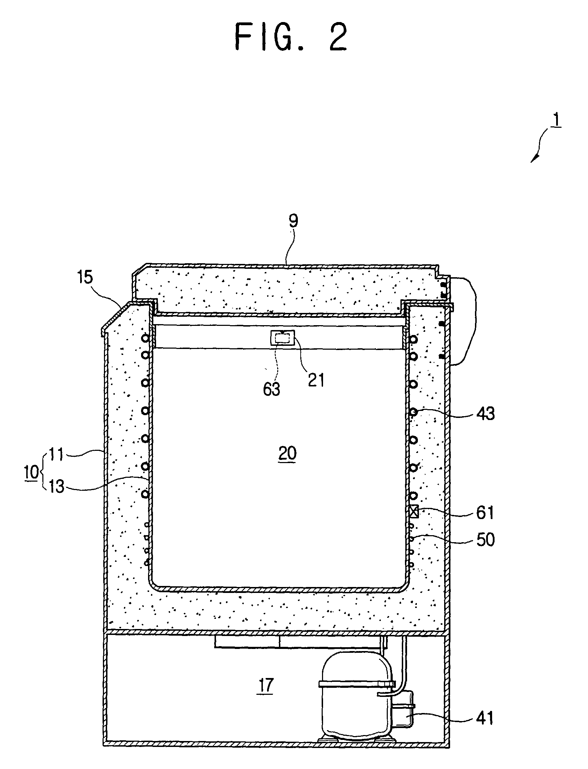

Referring to Figures 1 and 2, a "kimchi refrigerator" 1 includes a main body 10 provided with a pair of chambers 20 for receiving food, and doors 9 hingedly coupled to the top part of the main body 10 for opening and closing the chambers 20.

The main body 10 is comprised of an outer casing 11 defining the unit's outward appearance, an inner casing 13 defining the chambers 20, and a top cover 15, having openings forming the top opening of each chamber 20, on the top part of the main body 10. There is a foam-filled space between the outer casing 11 and the inner casing 13. Below the chambers 20 is provided a component chamber 17.

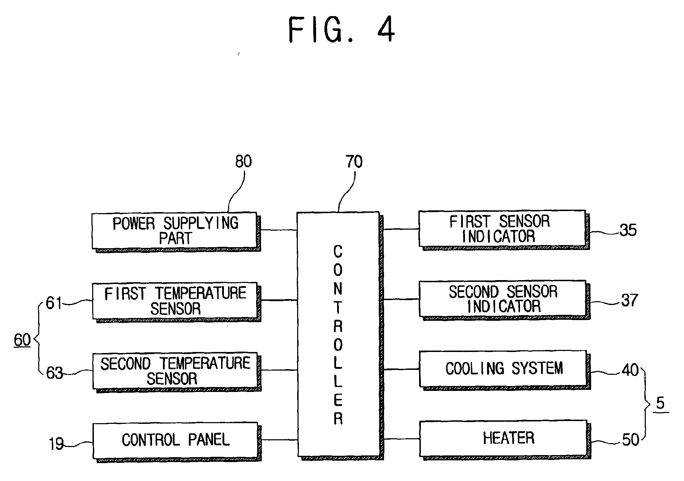

In the main body 10 is provided a temperature adjuster 5 (Figure 4) for adjusting the temperature in each of the chambers 20, sensors 60 for sensing the temperature in the chambers 20, a controller 70 (Figure 4) for controlling operation modes and the temperature adjuster 5 based on the temperatures in the chambers 20 sensed by the sensors 60, and a power supplying part 80 (Figure 4) for supplying electric power to the aforementioned components. A control panel 19 is mounted in front of the top cover 15 of the main body 10, allowing a user to select the operational mode of the "kimchi refrigerator" 1 and check the operational state thereof.

The temperature adjuster 5 comprises a cooling system 40 (Figure 4) for cooling the chambers 20 as required and a heater 50 for heating each chamber 20 as required.

The cooling system 40 is comprised of a compressor 41 installed in the component chamber 17, a condenser (not shown) for condensing a refrigerant from the compressor 41, an evaporator 43 for cooling each chamber 20 by evaporating the refrigerant from the condenser (not shown), a valve (not shown) for adjusting the amount of the refrigerant supplied to the evaporators 43 from the compressor 41.

The evaporators 43 comprises pipes which closely surrounds the parts of inner casing 13, forming each chamber 20, in the foam-filled space.

The heaters 50 also closely surrounds parts of the inner casing 13 like the evaporator 43.

The temperature sensors 60 include, in each chamber, a first temperature sensor 61 for sensing the temperature at a lower part of the chamber 20 and a second temperature sensor 63 for sensing the temperature at an upper part of the chamber.

The first temperature sensor 61 is installed in the foam-filled space in contact with the outside surface of the inner casing 13. The second temperature sensor 63 senses the temperature inside a central region of the chamber 20 and is accommodated in a sensor accommodating part 21 of the top cover 15.

The sensor accommodating part 21 is closed by a sensor cover 23, but can be opened, and therefore it is possible to repair and to replace the second temperature sensor 63.

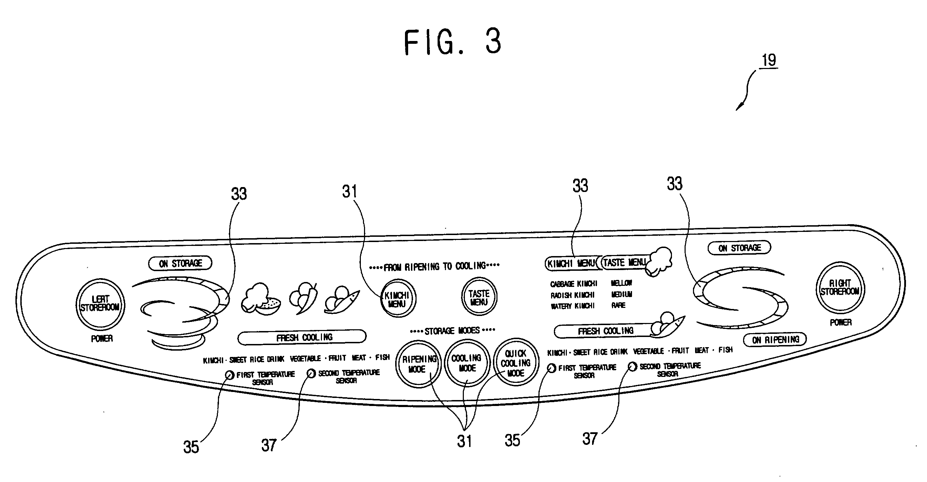

Referring to Figure 3, in the control panel 19 are provided a plurality of operation selecting buttons 31 allowing a user to set the operating modes of the chambers 20, operation indicators 33 showing an operation state of the chambers 20, and pairs of first and second sensor indicators 35, 37 for indicating whether the first and second temperature sensors 61, 63 of each chamber are operating correctly.

The first and second sensor indicators 35, 37 may, as shown in Figure 3, be made of luminous devices emitting various colours of light or auditory devices generating a warning signal so as to indicate an abnormality of the first and second temperature sensors 61, 63.

Referring to Figure 4, the controller 70 compares temperatures of a chamber 20 sensed by the respective first and second temperature sensors 61, 63 with a predetermined set up temperature within temperature limits under a cooling mode or a fermentation mode, and controls the cooling system 40 or the heater 50 in order to accurately and respnonsively keep the temperature of the chamber 20 within the temperature limits of current operating mode.

The temperature limits according to the predetermined set up operating mode, programmed into the controller 70, are set on the basis of the central region of a chamber 20. In this case, the temperature limits of the first and second temperature sensors 61, 63 may be equal or different to each other, according to their positions.

For example, the temperature limits of the first temperature sensor 61 may be smaller than the temperature limits of the second temperature sensor 63 which is more responsive to temperature changes in the chamber 20. In this case, the temperature of the chamber 20 is adjusted by controlling the temperature adjuster 5 on the basis of the temperature limits of the first temperature sensor 61 if the temperature of the chamber 20 is within the temperature limits of the second temperature sensor 63, after controlling the temperature adjuster 5 with the temperature of the chamber 20 sensed by the second temperature sensor 63. Accordingly, the temperature of the chamber 20 can be effectively controlled by sensing quickly and accurately a change therein.

During the operation of the "kimchi refrigerator" 1, if one of the first and second temperature sensors 61, 63 is out of order, the controller 70 causes the corresponding sensor indicator 35, 37 to indicate the abnormality of the first or second temperature sensor 61, 63, and simultaneously controls the temperature adjuster 5 based on the output from the other normally operating sensor 61, 63. If both of the sensors 61, 63 are out of order, the controller 70 causes both of the corresponding indicators 35, 37 to indicate the abnormality of the temperature sensors 61, 63, and simultaneously suspends the operation of the temperature adjuster 5.

The operation of the "kimchi refrigerator" 1 will now be described in respect of one of the chambers 20. It will be appreciated that operation in respect of the other chamber is identical.

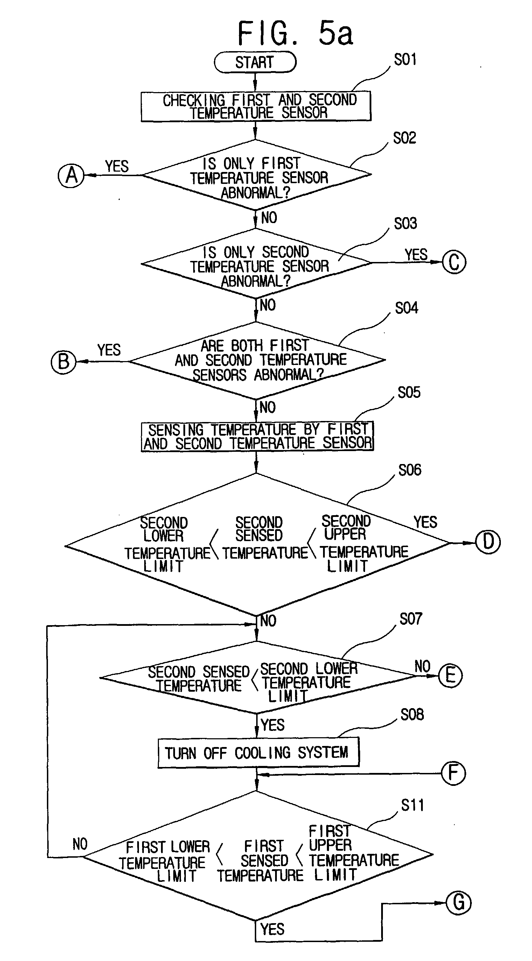

Referring to Figures 5a through 5c, when the "kimchi refrigerator" 1 starts the cooling mode, the controller 70 activates the first and second temperature sensors 61, 63 (S01), and determines whether only the first temperature sensor 61 is abnormal (S02), only the second temperature sensor 61 is abnormal (S03), or both of the sensors 61, 63 are abnormal (S04) in sequence.

In step S02, if abnormality of only the first temperature sensor 61 is determined, the controller 70 indicates that the first temperature sensor 61 is out of order, and controls the temperature of the corresponding chamber 20 using only the second temperature sensor 63.

That is, the controller 70 causes the first sensor indicator 35 to indicate the abnormality of the first temperature sensor 61 (S101), and uses only the second temperature sensor 63 to sense the temperature of the chamber 20 (S102). Next, the controller 70 compares the temperature of the chamber 20, sensed by the second temperature sensor 63, with a second lower temperature limit (S103), and prevents the temperature of the chamber 20 from falling below the second lower temperature limit by turning off the cooling system 40, if the inner temperature of the chamber 20 sensed by the second temperature sensor 63 is lower than the second lower temperature limit (S104).

Next, the controller 70 compares the temperature of the chamber 20 sensed by the second temperature sensor 63 with the second lower temperature limit (S103). Then, the controller 70 determines whether the inner temperature of the chamber 20 sensed by the second temperature sensor 63 is higher than a second upper temperature limit, if the temperature of the chamber 20 sensed by the second temperature sensor 63 is higher than the second lower temperature limit (S105). If the temperature of the chamber 20 is higher than the second upper temperature limit, the controller 70 prevents the temperature of the chamber 20 from rising above the second upper temperature limit by turning on the cooling system 40 (S106).

Thereafter, the controller 70 returns the procedure for controlling the temperature to the step of S01. Accordingly, though the first temperature sensor 61 is out of order, the second temperature sensor 63 can uniformly maintain the temperature of the chamber 20.

If the first temperature sensor 61 is operating normally in step S02 and the second temperature sensor 63 is abnormal in step S03, the controller 70 causes the abnormality of the second temperature sensor 63 to be indicated, and controls the inner temperature of the chamber 20 with only the first temperature sensor 61.

That is, the controller 70 causes the second sensor indicator 37 to indicate the abnormality of the second temperature sensor 63 (S201), and uses the first temperature sensor 61 to sense the inner temperature of the chamber 20 (S202). Next, the controller 70 compares the temperature of the chamber 20 sensed by the first temperature sensor 61 with a first lower temperature limit (S203), and prevents the temperature of the chamber 20 from lowering below the first lower temperature limit by turning off the cooling system 40, if the temperature of the chamber 20 sensed by the first temperature sensor 61 is lower than the first lower temperature limit (S204).

The controller 70 compares the temperature of the chamber 20, sensed by the first temperature sensor 61, with the first lower temperature limit (S203). The controller 70 determines whether the temperature of the chamber 20, sensed by the first temperature sensor 61, is higher then a first upper temperature limit, if the temperature of the chamber 20 sensed by the first temperature sensor 61 is higher than the first lower temperature limit (S205). If the inner temperature of the chamber 20 is higher than the first upper temperature limit, the controller 70 prevents the temperature of the chamber 20 from rising above the second upper temperature limit by turning on the cooling system 40 (S206).

Thereafter, the controller 70 returns to step S01. Accordingly, although the second temperature sensor 63 is out of order, the first temperature sensor 61 can uniformly maintain the temperature of the chamber 20. In the step of S03, if the abnormality of the second temperature sensor 63 is determined, a user can replace or repair the second temperature sensor 63. In this case, a service engineer opens the sensor cover 23 of the sensor accommodating part 21, and repairs or replaces the second temperature sensor 63.

If it is determined that both the first and second temperature sensors 61, 63 are abnormal in step S04 through the steps of S02 and S03, the controller 70 cuts off the electric power supplied to the temperature adjuster 5 of the main body 10 from the power supplying part 80, thereby suspending the operation of the temperature adjuster 5 (S301). Next, the controller 70 causes the first and second sensor indicators 35, 37 to indicate the abnormalities of the first and second temperature sensors 61, 63 (S302), and warns the user that the "kimchi refrigerator" 1 is unsuitable to use. Thus, when the first and second temperature sensors 61, 63 are out of order, the controller 70 keeps the "kimchi refrigerator" 1 from operating, to thereby prevent damage to the components of the temperature sensor 5 due to overloading.

Conversely, if it is determined that both the first and second temperature sensors 61, 63 are normal in step S04 through steps S02 and S03, the controller uses the first and the second temperature sensors 61, 63 to sense the temperature of the chamber 20 (S05). Next, the controller determines whether the temperature of the chamber 20, sensed by the second temperature sensor 63, is between the second upper temperature limit and the second lower temperature limit (S06). That is, the temperature of the chamber 20 sensed by the second temperature sensor 63 is compared with the second upper and lower temperature limits.

In order to determine whether the temperature of the chamber 20, sensed by the second temperature sensor 63, is beyond the second temperature limits, the controller 70 compares the temperature of the chamber 20, sensed by the second temperature sensor 63, with the second lower temperature limit (S07), and prevents the temperature of the chamber 20 from falling below the second lower temperature limit by turning off the cooling system 40, if the temperature of the chamber 20, sensed by the second temperature sensor 63, is lower than the second lower temperature limit (S08).

Then, the controller 70 compares the temperature of the chamber 20, sensed by the second temperature sensor 63, with the second lower temperature limit (S07), and then determines whether the temperature of the chamber 20 sensed by the second temperature sensor 63 is higher than the second upper temperature limit, if the inner temperature of the chamber 20 sensed by the second temperature sensor 63 is higher than the second upper temperature limit (S09). If the temperature of the chamber 20 is higher than the second upper temperature limit, the controller 70 prevents the inner temperature of the chamber 20 from rising above the second upper temperature limit by turning on the cooling system 40 (S10),

In this manner, the controller 70 determines whether the temperature of the chamber 20, sensed by the first temperature sensor 61, is within the first temperature limits, in other words, between the first lower temperature limit and the first upper temperature limit (S11). If the temperature of the chamber 20 sensed by the first temperature sensor 61 is outside the first temperature limits, the controller 70 repeats the procedure for controlling the temperature from step S07 to step S11.

Next, if the temperature of the chamber 20, sensed by the first temperature sensor 61 is within the first temperature limits in step S11, the controller 70 goes to step S203, and controls the temperature of the chamber 20 by means of the first temperature sensor 61. That is, the controller 70 controls the cooling system 40 based on the temperature inside the chamber 20, sensed by the second temperature sensor 63, and therefore accurately and responsively maintains the temperature of the chamber 20 in the cooling mode.

If the inner temperature of the chamber 20, sensed by the second temperature sensor 63, is the equal to the second upper or lower temperature limits in the step of S06, the controller 70 determines that the temperature of the chamber 20 is stable, and controls the temperature of the chamber 20 by means of the first temperature sensor 61 after going to step S203. That is, if the temperature of the chamber 20, sensed by the second temperature sensor 63, is equal to the second upper or lower temperature limit in step S06, the controller 70 compares the temperature of the chamber 20 sensed by the first temperature sensor 61 with the first lower temperature limit. If the temperature of the chamber 20, sensed by the first temperature sensor 61, is lower than the first lower temperature limit (S203), the controller 70 turns off the cooling system 40 and prevents the temperature of the chamber 20 from falling below the first lower temperature limit (S204).

Then, the controller 70 compares the temperature of the chamber 20 sensed by the first temperature sensor 61 with the first lower temperature limit in step S203, and then compares the temperature of the chamber 20, sensed by the first temperature sensor 61, with the first upper temperature limit, if the temperature of the chamber 20 sensed by the first temperature sensor 61 is higher than the first upper temperature limit (S205). If the temperature of the chamber 20 is higher than the first upper temperature limit, the controller 70 prevents the temperature of the chamber 20 from rising above the first upper temperature limit by turning on the cooling system 40 (S206). Thereafter, the controller 70 returns to step S01. Thus, it is possible to accurately and responsively maintain the temperature of the chamber 20 in the cooling mode.

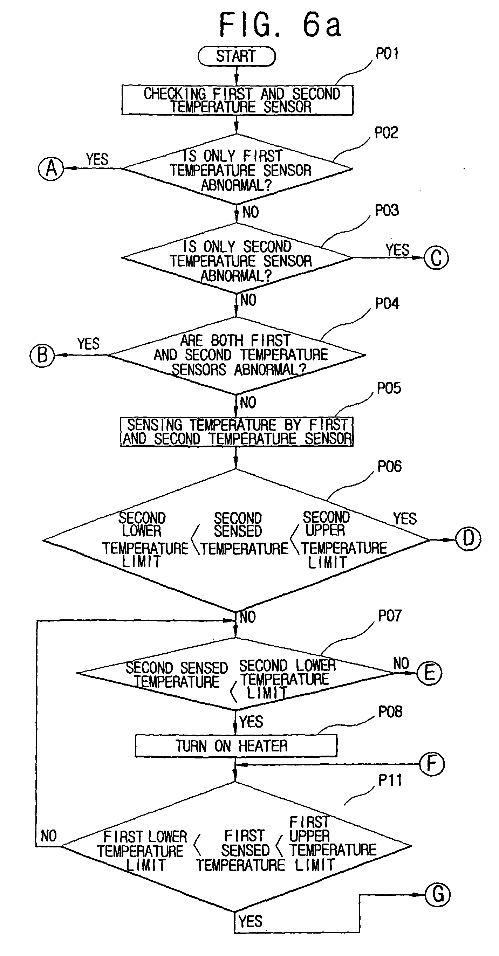

The present "kimchi refrigerator", as shown in Figure 6a through 6c, can quickly and accurately control the temperature of the chamber 20 by means of the first and second temperature sensors 61, 63 in the fermentation mode as well. At this time, the procedure for controlling the temperature under the fermentation mode is equivalent to the procedure of the cooling mode in Figure 5a through 5c except that the heater 50 is turned on in steps P08, P103 and P203, and turned off in steps P10, P106 and P206. Here, the temperature limits are appropriate for the fermentation mode.

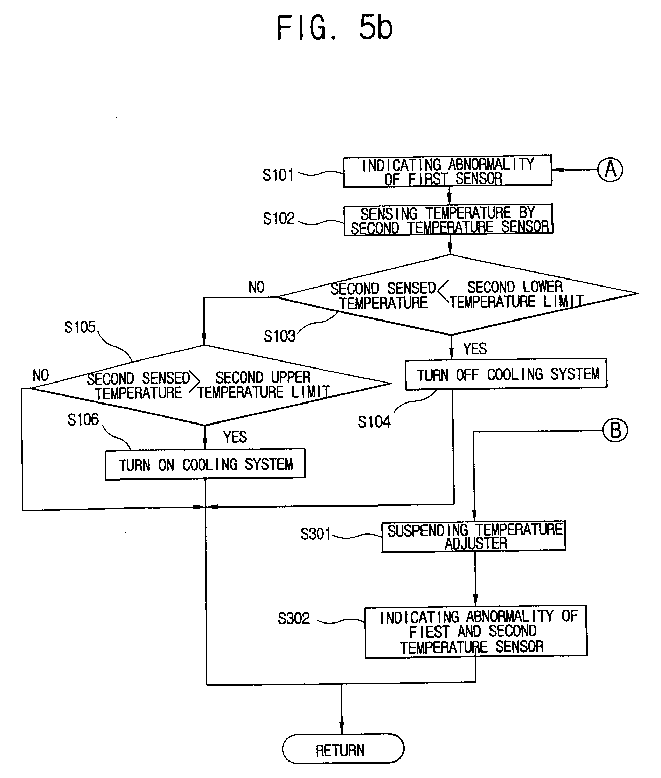

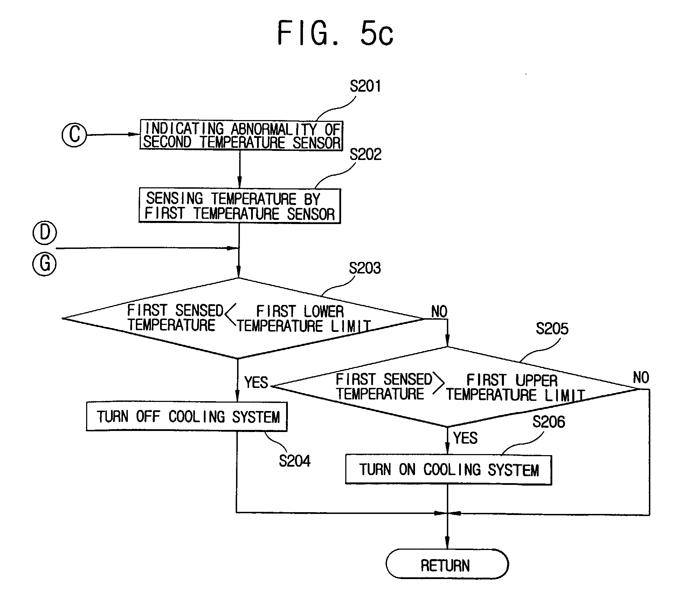

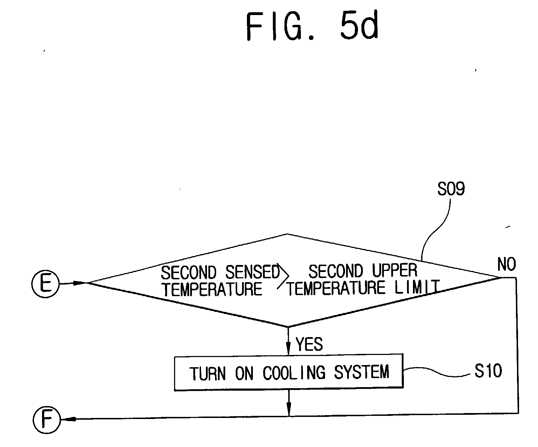

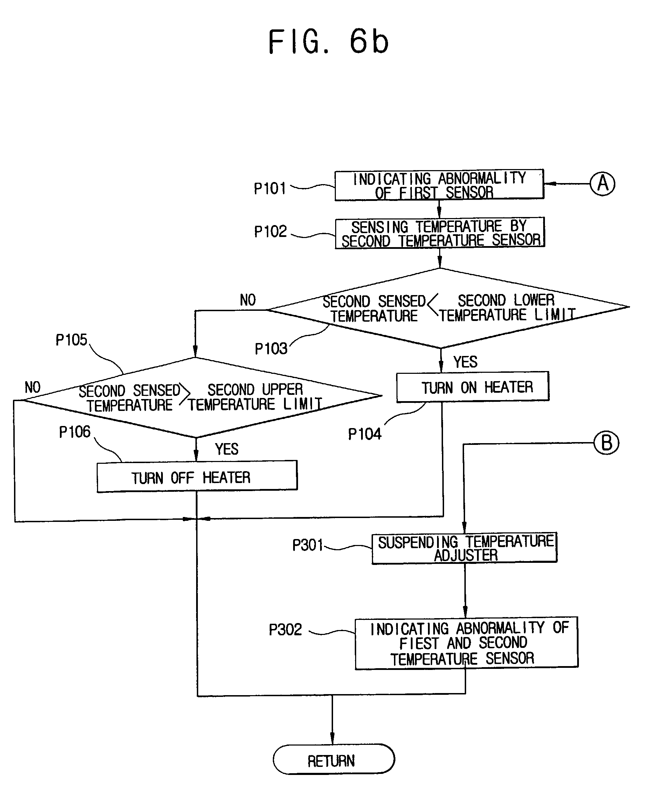

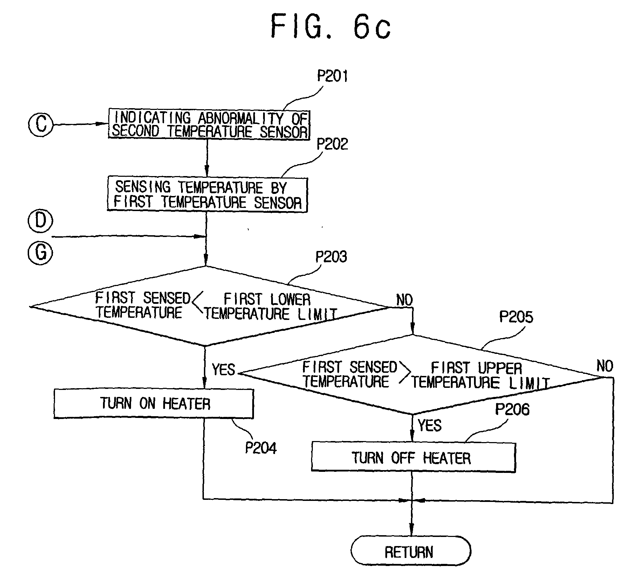

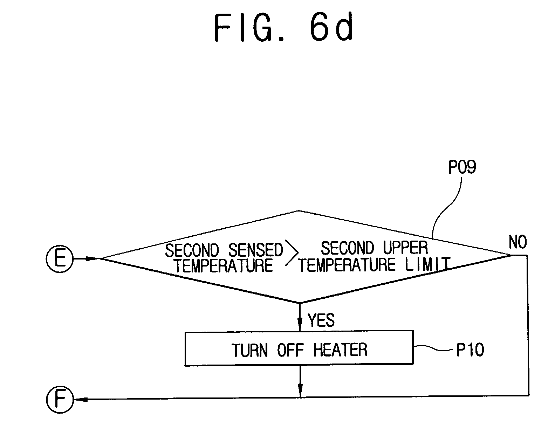

Further, the present "kimchi refrigerator" according to the present invention can also quickly and accurately control the temperature of the chamber 20 in the case that the fermentation mode and the cooling mode are used alternately, following the procedures for controlling the temperature in Figures 5 and 6.

Thus, the inner temperature of the chambers can be effectively controlled by driving the temperature adjuster, depending upon the result of comparing the predetermined upper and lower temperature limits with the temperature sensed by at least one of the first and second temperature sensors, the first and second temperature sensors being disposed in different positions to each other, and sense the temperature of the chamber. Also, if one of the sensors is abnormal, the other sensor is used to control the temperature adjuster. When the second temperature sensor is out of order, it is possible to replace and repair the second temperature sensor.

The present invention is not limited only to the abovementioned embodiment, but it also goes without saying that the present invention is applied to various refrigerators.

As above described, the temperature of the chamber is effectively controlled by accurately and promptly sensing the real temperature inside the chamber. Even if one of the first and second temperature sensors is out of order, it is possible to replace or repair the abnormal temperature sensor, or to control the temperature adjuster by means of the other normal temperature sensor.

## Claims

1. An apparatus for controlling the temperature of foodstuffs, the apparatus comprising a chamber (20) for receiving foodstuffs, a first temperature sensor (61) for sensing the temperature of said chamber (20), temperature adjusting means (5) for adjusting the temperature of said chamber (20) and control means (70) for controlling the temperature adjusting means (5), **characterised by** a second temperature sensor (63) for sensing the temperature of said chamber (20), the second temperature sensor (63) being located so as to sense the temperature of said chamber (20) more accurately than the first temperature sensor (61), and the control means (70) being configured to control the temperature adjusting means (5) in dependence on the output of the second sensor (63), in the event that the output of the first sensor (61) indicates a chamber temperature within a predetermined, acceptable temperature range.

2. An apparatus according to claim 1, wherein the control means (70) is configured to operate said temperature adjusting means (5) in the event that the output of the first sensor (61) indicates a chamber temperature within said predetermined, acceptable temperature range and the output of the second sensor (63) indicates a temperature outside of a different, predetermined, acceptable temperature range.

3. An apparatus according to claim 2, wherein the control means (70) is configured such that, in the event of the output of the second sensor (63) indicating a temperature within said different, predetermined, acceptable temperature range, the temperature adjusting means (5) is controlled in dependence on the output of the first sensor (61).

4. An apparatus according to claim 1, 2 or 3, wherein the first and second sensors (61, 63) are located at lower and upper positions respectively.

5. An apparatus according to claim 4, wherein the first sensor (61) is positioned so as to sense the temperature of the chamber (20) indirectly by sensing the temperature of a portion of a wall (13) of the chamber (20).

6. An apparatus according to claim 4 or 5, wherein the second sensor (63) is located in a recess (21), provided with a removable cover (23).

7. An apparatus according to any preceding claim, wherein the temperature adjusting means (5) comprises cooling means (40).

8. An apparatus according to any preceding claim, wherein the temperature adjusting means (5) comprises heating means (50).

9. An apparatus according to any preceding claim, including indicating means (35, 37) for indicating the operational condition of said sensors (61, 63).

10. An apparatus according to any preceding claim, having two independently temperature controlled chambers (20) for receiving foodstuffs.

11. A refrigerator comprising at least one chamber and a temperature adjuster adjusting an inner temperature of the chamber, further comprising:
a first temperature sensor approximately sensing the temperature inside the chamber,
a second temperature sensor spaced from the first temperature sensor so as to sense the real temperature inside the chamber; and
a controller controlling the temperature adjuster according to the temperature sensed by the second temperature sensor when the temperature sensed by the first temperature sensor is within predetermined temperature limits of the chamber and the temperature sensed by the second temperature sensor is not within the predetermined temperature limits of the chamber.

12. The refrigerator according to claim 11, wherein the first and second temperature sensors are installed at lower and upper parts of the chamber, respectively; and
the controller is programmed with first and second temperature limits to be compared with the temperatures sensed by the first and second temperature sensors, respectively.

13. The refrigerator according to claim 11, wherein one of the first and second temperature sensors is removably installed.

14. The refrigerator according to claim 12, wherein one of the first and second temperature sensors is removably installed.

15. The refrigerator according to claim 13, wherein the first temperature sensor is in contact with the bottom surface of the chamber and senses the temperature of the surface of the chamber; and
the second temperature sensor is installed at the upper part of the chamber and senses the inner temperature of the chamber.

16. The refrigerator according to claim 15, wherein at the upper part of the chamber are provided a sensor accommodating part accommodating the second sensor, and a sensor cover opening and closing the sensor accommodating part.

17. The refrigerator according to claim 12, wherein the first and second temperature limits are different each other.

18. The refrigerator according to claim 17, wherein the controller determines whether the temperature sensed by the first temperature sensor is within the first temperature limits, if the temperature sensed by the second temperature sensor is within the second temperature limits, to thereby control the temperature adjuster.

19. The refrigerator according to claim 18, wherein the controller controls the temperature adjuster to allow the temperature sensed by the second temperature sensor to be within the second temperature limits, if the temperature sensed by the second temperature sensor is beyond the second temperature limits, and determines whether or not the temperature sensed by the first temperature sensor is within the first temperature limits, if the temperature sensed by the second temperature sensor is within the second temperature limits, to thereby control the temperature adjuster.

20. The refrigerator according to claim 17, wherein the controller controls the temperature adjuster until the temperature sensed by the second temperature sensor is within the second temperature limits, and then determines whether or not the temperature sensed by the first temperature sensor is within the first temperature limits, to thereby control the temperature adjuster.

21. The refrigerator according to claim 20, wherein the controller controls the temperature adjuster to allow the temperature sensed by the second temperature sensor to be within the second temperature limits, if the temperature sensed by the second temperature sensor is beyond the second temperature limits, and determines whether or not the temperature sensed by the first temperature sensor is within the first temperature limits, if the temperature sensed by the second temperature sensor is within the second temperature limits, to thereby control the temperature adjuster.

22. The refrigerator according to claim 20, wherein the controller controls the temperature adjuster until the temperature sensed by the second temperature sensor is within the second temperature limits, and then determines whether or not the temperature sensed by the first temperature sensor is within the first temperature limits, to thereby control the temperature adjuster.

23. The refrigerator according to claim 16, further comprising first and second sensor indicators indicating operating states of the first and second temperature sensors; and
wherein the controller controls the operating states of the first and second temperature sensors.

24. The refrigerator according to claim 23, wherein where one of the first and second temperature sensors is determined to be abnormal, the controller allows the concerned sensor indicators to indicate abnormality thereof and determines whether or not the temperature sensed by the other normal temperature sensor is within the temperature limits of the normal temperature sensor, to thereby control the temperature adjuster.

25. The refrigerator according to claim 20, wherein where both the first and second temperature sensors are out of order, the controller allows both the first and second sensor indicators to indicate the abnormalities of both the first and second temperature sensors, and suspends the operation of the temperature adjuster.

26. The refrigerator according to claim 11, wherein the temperature adjuster comprises:
a cooling system cooling the chamber with a compressor, a condenser, an evaporator and a valve which circulate a refrigerant; and
a heater heating the chamber.

27. A method for controlling a refrigerator comprising at least one chamber and a temperature adjuster adjusting an inner temperature of the chamber, comprising the steps of:
sensing the inner temperature of the chamber by means of first and second temperature sensors disposed at different positions each other;
determining whether or not the temperature sensed by at least one of the first and second temperature sensors is within predetermined temperature limits of the chamber, to thereby control the temperature adjuster.

28. The method according to claim 27, wherein the first and second temperature sensors are installed lower and upper parts of the chamber, respectively; and
the predetermined temperature limits first and second temperature limits to be compared with the temperatures sensed by the first and second temperature sensors, respectively.

29. The method according to claim 27, wherein one of the first and second temperature sensors is removably installed.

30. The method according to claim 28, wherein one of the first and second temperature sensors is removably installed.

31. The method according to claim 28, wherein the first and second temperature limits are different each other.

32. The method according to claim 28, further comprising the step of determining whether the temperature sensed by the first temperature sensor is within the first temperature limits, if the temperature sensed by the second temperature sensor is within the second temperature limits, to thereby control the temperature adjuster.

33. The method according to claim 31, further comprising the steps of controlling the temperature adjuster to allow the temperature sensed by the second temperature sensor to be within the second temperature limits, if the temperature sensed by the second temperature sensor is beyond the second temperature limits, and determining whether or not the temperature sensed by the first temperature sensor is within the first temperature limits, if the temperature sensed by the second temperature sensor is within the second temperature limits, to thereby control the temperature adjuster.

34. The method according to claim 29, further comprising the step of controlling the temperature adjuster until the temperature sensed by the second temperature sensor is within the second temperature limits, and then determining whether or not the temperature sensed by the first temperature sensor is within the first temperature limits, to thereby control the temperature adjuster.

35. The method according to claim 32, further comprising the steps of controlling the temperature adjuster to allow the temperature sensed by the second temperature sensor to be within the second temperature limits, if the temperature sensed by the second temperature sensor is beyond the second temperature limits, and determining whether or not the temperature sensed by the first temperature sensor is within the first temperature limits, if the temperature sensed by the second temperature sensor is within the second temperature limits, to thereby control the temperature adjuster.

36. The method according to claim 35, further comprising the step of controlling the temperature adjuster until the temperature sensed by the second temperature sensor is within the second temperature limits, and then determining whether or not the temperature sensed by the first temperature sensor is within the first temperature limits, to thereby control the temperature adjuster.

37. The method according to claim 27, further comprising the step of checking operating states of the first and second temperature sensors and indicating the operating state of the first and the second temperature sensors by means of the first and the second sensor indicators.

38. The method according to claim 37, further comprising the step of allowing the concerned sensor indicators to indicate abnormality thereof where one of the first and second temperature sensors is determined to be abnormal, and determining whether or not the temperature sensed by the other normal temperature sensor is within the temperature limits of the normal temperature sensor, to thereby control the temperature adjuster.

39. The method according to claim 37, further comprising the step of allowing both the first and second sensor indicators to indicate the abnormalities of both the first and second temperature sensors, and suspending the operation of the temperature adjuster, where both the first and second temperature sensors are out of order.

40. The method according to claim 27, wherein the temperature adjuster comprises:
a cooling system cooling the chamber with a compressor, a condenser, an evaporator and a valve which circulate a refrigerant; and
a heater heating the chamber.
